# EUROPÄISCHE PATENTSCHRIFT

(11) **EP 2 925 649 B1**
(45) Veröffentlichungstag und Bekanntmachung des Hinweises auf die Patenterteilung: **08.01.2020**
(21) Anmeldenummer: 13807907.4
(22) Anmeldetag: 06.11.2013
(51) Int. Cl.: B65G 47/84, B65C 9/04, B65C 9/06, B23Q 7/14, B23Q 7/18

(54) **VORRICHTUNG ZUR AUFNAHME EINES WERKSTÜCKS FÜR EIN WERKSTÜCKTRÄGERUMLAUFSYSTEM EINER PRODUKTIONSMASCHINE**
DEVICE FOR RECEIVING A WORKPIECE FOR A WORKPIECE CARRIER CIRCULATION SYSTEM OF A PRODUCTION MACHINE
DISPOSITIF DE RÉCEPTION D'UNE PIÈCE POUR UN SYSTÈME ROTATIF DE PORTE-PIÈCE APPARTENANT À UNE MACHINE DE PRODUCTION

(30) Priorität: 28.11.2012 DE 102012221719
(43) Veröffentlichungstag der Anmeldung: 07.10.2015
(73) Patentinhaber: Schaeffler Technologies AG & Co. KG, 91074 Herzogenaurach (DE)
(72) Erfinder: SCHMID, Günter, 90475 Nürnberg (DE); SCHÜLER, Ralf, 98530 Wichtshausen (DE); FRÜHWALD, Andreas, 91460 Baudenbach (DE)
(86) Internationale Anmeldenummer: PCT/DE2013/200272
(87) Internationale Veröffentlichungsnummer: WO 2014/082634

(56) Entgegenhaltungen:
- EP-A1- 0 707 550
- DE-A1-102004 026 755
- DE-A1-102009 043 497

## Beschreibung

### Gebiet der Erfindung

Die Erfindung betrifft eine Vorrichtung zur Aufnahme eines Werkstücks für ein Werkstückumlaufsystem einer Produktionsmaschine nach den oberbegriffsbildenden Merkmalen des Patentanspruchs 1, und sie insbesondere vorteilhaft in Rundläufermaschinen oder in Rundtaktmaschinen in der Automatisierungstechnik, in Montage-, Prüf- und Beschriftungsmaschinen, in Zuführsystemen von Werkzeugmaschinen oder in Etikettiermaschinen von Behälterbehandlungsund Getränkeabfüllanlagen anwendbar.

### Hintergrund der Erfindung

Im Rahmen der Produktion oder Bearbeitung von Werkstücken gleich welcher Art ist es häufig erforderlich, mehrere Arbeitsschritte an einem solchen Werkstück nacheinander vorzunehmen. Zu diesem Zweck ist es bekannt, das Werkstück über ein Werkstückumlaufsystem an unterschiedliche Arbeitsstationen einer Produktionsmaschine zu transportieren. Ein solches Werkstückumlaufsystem umfasst letztlich zwei wesentliche Bauteile, nämlich zum einen einen Werkstückträger, der von Arbeitsposition zu Arbeitsposition bewegt wird und der eine Werkstückaufnahme aufweist, die im Hinblick auf das zu halternde Werkstück ausgelegt ist. An diesem Werkstückträger, respektive in der Werkstückaufnahme, verbleibt das Werkstück während mehrerer Arbeitsprozesse. Hierzu ist maschinenseitig als zweites Bauteil eine entsprechende Halterung vorgesehen, in die der Werkstückträger lösbar eingebracht wird, respektive an welcher es lösbar für die Dauer, während welcher er sich im Arbeitsbereich der Produktionsmaschine befindet, aufgenommen ist. Der jeweilige Förderbetrieb kann kontinuierlich oder getaktet sein, wobei je nach Förderbetrieb die jeweilige Bearbeitung in einer Bearbeitungsstation entweder am daran vorbeibewegten Werkstück bei kontinuierlicher Förderung erfolgt, oder während des Haltebetriebs. Die entsprechenden Arbeiten können unterschiedlichster Natur sein. Es können entweder Montagevorgänge erfolgen, das heißt, dass an dem aufgenommenen Werkstück weitere Einzelteile angesetzt werden, es können Prüf- oder Messvorgänge erfolgen oder es können Bedruckungs- oder Beschriftungsvorgänge erfolgen etc.

Wesentliche Elemente sind wie beschrieben der Werkstückträger sowie die Halterung, die ihn temporär und lösbar aufnimmt. Dabei ist der Werkstückträger üblicherweise fest in der Halterung aufgenommen. Mitunter ist es jedoch erforderlich, das Werkstück in eine bestimmte Position zu bringen, beispielsweise müssen zu etikettierende Flaschen mitunter um ihre Längsachse gedreht werden, um eine Beschriftung oder Etikettierung zu ermöglichen. Hierzu ist es beispielsweise durch die DE 10 2004 026 755 A1 bekannt, über einen mehrere Drehteller aufweisenden Drehtisch die Werkstücke selbst zu drehen, wobei jeder Drehteller mit einer eigenen motorischen Antriebseinheit ausgestattet ist. Diese Ausgestaltung zur Ermöglichung einer Werkstückrotation ist jedoch sehr aufwändig, sie erfordert spezielle Antriebe respektive mechanische Kopplungen und ist darüber hinaus auch störanfällig.

Alternativ ist durch die DE 10 2009 043 497 A1 eine gattungsgemäße Vorrichtung zur Aufnahme eines Werkstücks für ein Werkstückumlaufsystem einer Produktionsmaschine bekannt, die einen Werkstückträger mit einer Werkstückaufnahme und eine maschinenseitig anzuordnende Halterung zur lösbaren temporären Aufnahme des Werkstückträgers umfasst, wobei der um eine Achse drehbar in der Halterung aufnehmbare Werkstückträger einen Rotorabschnitt aufweist, der bei Aufnahme in der Halterung mit einem an der Halterung vorgesehenen Stator unter Bildung eines Torquemotors zusammenwirkt. Bei einer solchen Vorrichtung hat es sich jedoch als nachteilig erwiesen, dass der Rotorabschnitt glattzylindrisch ausgebildet ist und somit eine absolut präzise Zentrierung respektive Positionierung des Werkstücks, wie sie beispielsweise bei Beschriftungsmaschinen erforderlich ist, nicht möglich ist.

### Aufgabe der Erfindung

Ausgehend von den Lösungen des bekannten Standes der Technik liegt der Erfindung die Aufgabe zu Grunde, eine in ihrer Funktion und Wirkungsweise verbesserte Vorrichtung zur Aufnahme eines Werkstücks für ein Werkstückumlaufsystem einer Produktionsmaschine zu konzipieren.

### Beschreibung der Erfindung

Erfindungsgemäß wird diese Aufgabe bei einer Vorrichtung zur Aufnahme eines Werkstücks nach dem Oberbegriff des Anspruchs 1 derart gelöst, dass der Rotorabschnitt als radial vorspringender umlaufender Ansatz mit integrierten Permanentmagneten ausgeführt ist, der in der Montagestellung zwischen halterungsseitig voneinander beabstandet angeordnete Statorwicklungen des seitlich offenen Stators aufgenommen ist. Ein besonders kompakter und platzsparender Aufbau wird somit erhalten.

Mit einem solchen Torquemotor, der in an sich bekannter Weise darauf basiert, dass über den Stator ein magnetisches Wanderfeld erzeugt wird, das mit den Magnetelementen des Rotorabschnitts zusammenwirkt, die dem Wanderfeld folgen, wodurch es zur Rotation kommt, ist ein hochpräziser Antrieb realisiert, der auch hohe Momente übertragen kann. Das heißt, dass eine präzise Zentrierung respektive Positionierung des Werkstücks möglich ist, was für viele Arbeitsaufgaben erforderlich ist, darüber hinaus ist auch eine Rotation sehr einfach möglich. Insbesondere handelt es sich um einen berührungslosen Antrieb, der letztlich verschleißfrei ist und platzsparend aufgebaut werden kann. Darüber hinaus ist er auch hochflexibel regelbar, was für eine exakte Steuerung des Rotationsbetriebs von Vorteil ist.

Der ringförmig umlaufende Ansatz ist mit entsprechenden Permanentmagneten versehen, die parallel zur Drehachse des Werkstückträgers magnetisiert sind. Befindet sich dieser Ansatz, also der Rotor, zwischen den Statorwicklungen des seitlich offenen Stators, zwischen welche er also von der Seite her eingeschoben werden kann, so steht das Magnetfeld der Permanentmagneten senkrecht zu den Statorwicklungen. Wird dortseits ein Wanderfeld erzeugt, so folgt der Rotor zwangsläufig diesem Wanderfeld infolge der magnetischen Wechselwirkung des wandernden Statorfeldes mit dem oder den Feldern der Permanentmagneten.

Da wie beschrieben der Stator von der Seite her offen ist, ist es möglich, bei ebenfalls seitlich offener Halterung den Werkstückträger von der Seite her zur Halterung zu bewegen und mit Einsetzen in die Halterung gleichzeitig auch den Rotorabschnitt zwischen die Statorwicklungen zu bewegen. Das heißt, dass bei Einbringen des Werkstückträgers in die Halterung zwangsläufig und automatisch auch der Torquemotor "zusammengesetzt" ist.

Die Statorwicklungen jeder Seite sind zweckmäßigerweise mittels jeweils einer magnetisch leitfähigen Platte verbunden, so dass der magnetische Fluss kurzgeschlossen ist. Die jeweiligen Platten sind aus einem Werkstoff mit hoher magnetischer Leitfähigkeit, also mit hoher Permeabilität. Die Statorwicklungen selbst sind vorzugsweise als Multilayerplatten ausgeführt.

Um auf einfache Weise eine Drehlagerung des Werkstückträgers in der Halterung zu erreichen sieht eine besonders vorteilhafte Weiterbildung der Erfindung vor, am Werkstückträger wenigstens ein Wälzlager mit einem Außenring vorzusehen, das entweder unmittelbar über den Außenring oder über ein mit ihm verbundenes Befestigungselement in der Montagestellung lösbar mit einer Fixiereinrichtung der Halterung zusammenwirkt. Die Halterung greift also entweder direkt am Außenring oder an einem mit dem Außenring fest verbundenen Befestigungselement an. Wird über die Halterung respektive deren Fixiereinrichtung der Außenring festgelegt, so kann zwangsläufig der Werkstückträger im Außenring, in dem er über Wälzkörper drehgelagert ist, rotieren. Wenngleich ein Wälzlager bereits ausreichend ist, das zur Aufnahme etwaiger Kippmomente axial gesehen verlängert ausgeführt sein kann, ist es zweckmäßig, zwei übereinander gesetzte Wälzlager anzuordnen, mithin also quasi eine zweireihige Wälzlagerung bei entsprechender axialer Gesamtlänge zu realisieren, um etwaige Kippmoment abfangen zu können.

Wie beschrieben wird der Werkstückträger nur temporär in der Halterung fixiert, er ist in dieser also lösbar aufgenommen und kann ihr wieder entnommen werden. Dies ist erforderlich, um den Werkstückträger automatisiert von einer Zuführeinrichtung an die Produktionsmaschine zu übergeben und über eine entsprechende Entnahmeeinrichtung wieder zu entnehmen. Um eine besonders zweckmäßige, gleichermaßen aber auch einfache Fixierung zu ermöglichen, sieht eine zweckmäßige Weiterbildung der Erfindung vor, dass die Fixiereinrichtung der Halterung mit dem Außenring oder dem Befestigungselement magnetisch zusammenwirken. Das heißt, dass dort keine mechanische Klemmung oder Arretierung oder dergleichen erfolgt, sondern allein auf magnetischem Wege der Werkstückträger fest in der Halterung aufgenommen wird. Dies setzt natürlich einerseits voraus, dass halterungsseitig respektive seitens der Fixiereinrichtung eine entsprechende Magnetfelderzeugungseinrichtung vorgesehen ist, wie andererseits natürlich auch der Außenring oder das Befestigungselement aus einem magnetisierbaren respektive damit wechselwirkenden Material besteht.

Dabei ist es denkbar, die Magnetfelderzeugungseinrichtung als einfachen Permanentmagneten auszulegen, wenn dessen Magnetfeld ausreichend ist, eine hinreichend feste Fixierung zu erwirken. Eine besonders vorteilhafte Weiterbildung der Erfindung sieht jedoch vor, dass die Fixiereinrichtung eine Magnetfelderzeugungseinrichtung aufweist, über die ein in seiner Stärke veränderliches Magnetfeld erzeugbar ist. Diese Erfindungsausgestaltung bietet mit besonderem Vorteil die Möglichkeit, die Feldstärke und damit letztlich die Haltekraft bedarfs- oder situationsabhängig zu verändern. Wird beispielsweise der Werkstückträger von der Zuführeinrichtung in die Halterung übergeben, so ist dortseits zunächst noch ein niedrigeres Magnetfeld gegeben, das mit der Übergabe verstärkt wird, um eine feste Fixierung zu ermöglichen. Soll der Werkstückträger wieder entnommen werden, so wird nach Ankopplung der Entnahmevorrichtung das Magnetfeld wieder reduziert, mithin also die Werkstückträgerfixierung "abgeschwächt", so dass die Entnahmevorrichtung den Werkstückträger aus der Halterung entnehmen kann.

Eine erfindungsgemäße Möglichkeit, dies zu realisieren, sieht vor, dass die Magnetfelderzeugungseinrichtung ein Magnetjoch bestehend aus wenigstens einem zwischen zwei Polschuhen aufgenommenen Permanentmagneten sowie wenigstens einer bestrombaren, um das Magnetjoch gewickelten Spule, die ein das Magnetfeld des Permanentmagneten verstärkendes oder schwächendes Magnetfeld erzeugt, aufweist. Hier ist also über den Permanentmagneten respektive das Magnetjoch ein Grundmagnetfeld gegeben. Zur Veränderung dieses Magnetfeld dient die Spule, die je nach Bestromungsrichtung ein das Feld des Permanentmagneten verstärkendes oder schwächendes Magnetfeld überlagern kann. Auf diese Weise kann die Haltemagnetkraft des Haltemagneten beliebig verändert werden.

Die Fixiereinrichtung, insbesondere die beiden Polschuhe, besitzen dabei zweckmäßigerweise eine formschlüssig am Außenring oder am Befestigungselement anliegende Anlagefläche oder Anlagekontur, die bei unmittelbarem Angriff entsprechend gerundet ausgeführt ist, oder bei Angriff an einem Befestigungselement der Elementkontur entsprechend geformt ist. Auf jeden Fall ergibt sich ein gewisser Formschluss, so dass eine sichere Fixierung gegeben ist, wenn der entsprechende Fixiermechanismus, beispielsweise der oben beschriebene Magnethaltemechanismus, aktiviert ist. An dieser Stelle ist darauf hinzuweisen, das selbstverständlich auch andere Haltemechanismen, die rein mechanischer Natur sind, beispielsweise durch Eingriff entsprechender Haltezapfen oder Ähnliches, vorgesehen sein können.

Mitunter ist es erforderlich, nicht nur eine grundsätzliche Drehbarkeit des Werkstücks respektive des Werkstückträgers zu realisieren, sondern das Werkstück respektive den Werkstückträger auch in eine bestimmte, definierte Position zu verbringen respektive etwaige Positionsänderungen zu erfassen. Zu diesem Zweck sieht eine Weiterbildung der Erfindung die Integration einer Positionsmesseinrichtung zur Ermittlung der Winkelposition des Werkstückträgers relativ zum Stator vor. Diese Positionsmesseinrichtung kann die Position entweder inkrementell oder absolut messen. In jedem Fall wird hierüber eine Positionsinformation ermittelt, die es ermöglicht, die genaue Relativstellung des Werkstücks zu bestimmen.

Die Positionsmesseinrichtung selbst kann auf einem beliebigen Messprinzip arbeiten, beispielsweise kann eine induktive, optische oder magnetoresistive Abtastung erfolgen. Die Messeinrichtung arbeitet vorzugsweise berührungslos.

Um dies auf einfache Weise zu ermöglichen weist die Positionsmesseinrichtung ein oder mehrere am Werkstückträger vorgesehene, mit ihm rotierende Messelemente, insbesondere einen Messring sowie einen statorseitig vorgesehenen Messsensor zum berührungslosen Erfassen des oder der Messelemente auf. Bevorzugt ist ein umlaufender Messring vorgesehen, an dem entsprechende inkrementelle Messpunkte oder Ähnliches, die von dem Messsensor je nach Messverfahren erfasst werden können, vorgesehen sind. Der Sensor kann wie beschrieben induktiv, optisch oder magnetoresistiv arbeiten. Er korrespondiert mit der übergeordneten Steuerungseinrichtung, die den gesamten Betrieb der Produktionsmaschine steuert, so dass dortseits die entsprechenden Positionsinformationen vorliegen und entweder der Torquemotor entsprechend angesteuert wird, um den Werkstückträger in die gewünschte Position zu bewegen, oder, wenn die Positionierung korrekt ist, die zugeordnete Arbeitseinheit entsprechend gesteuert wird.

### Kurze Beschreibung der Zeichnung

Eine bevorzugte Ausführungsform der erfindungsgemäß ausgebildeten Vorrichtung wird nachfolgend unter Bezugnahme auf die beigefügten Zeichnungen näher erläutert. Dabei zeigen:
- Figur 1: eine Prinzipdarstellung eines Werkstückträgers der erfindungsgemäßen Vorrichtung im Schnitt,
- Figur 2: eine Prinzipdarstellung einer Halterung der erfindungsgemäßen Vorrichtung im Schnitt,
- Figur 3: eine Prinzipdarstellung der erfindungsgemäßen Vorrichtung mit in der Halterung aufgenommenen Werkstückträger in einer Teilansicht, im Schnitt,
- Figur 4: eine Perspektivansicht der erfindungsgemäßen Vorrichtung mit in der Halterung aufgenommenem Werkstückträger,
- Figur 5: eine Prinzipdarstellung einer Produktionsmaschine mit mehreren erfindungsgemäßen Vorrichtungen, umfassend mehrere rotierende Arbeitstische mit mehreren Halterungen, in denen entsprechende Werkstückträger aufgenommen sind respektive zwischen welchen die Werkstückträger getauscht werden können.

### Ausführliche Beschreibung der Zeichnung

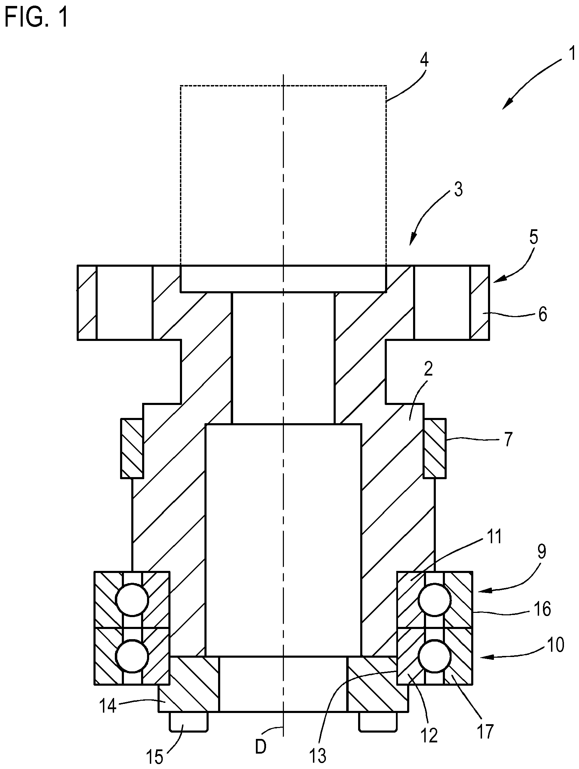

Figur 1 zeigt einen Werkstückträger 1 in einer Schnittdarstellung. Der Werkstückträger 1 umfasst einen hohlzylindrischen Trägerkörper 2, beispielsweise aus Aluminium. An seiner Oberseite ist eine Werkstückaufnahme 3 vorgesehen, in der gestrichelt dargestellt ein zu bearbeitendes Werkstück 4 lösbar aufgenommen ist. Bei dem Werkstück 4 kann es sich um ein beliebiges Werkstück handelt, beispielsweise ein Metallbauteil, an dem entsprechende Bearbeitungsmaßnahmen vorzunehmen sind, ein mit anzusetzenden Bauelementen oder sonstigen Einzelteilen zu bestückendes Werkstück oder ein zu bedruckendes oder zu beschriftendes Werkstück oder eine Glas- oder Kunststoffflasche, die zu etikettieren ist etc.

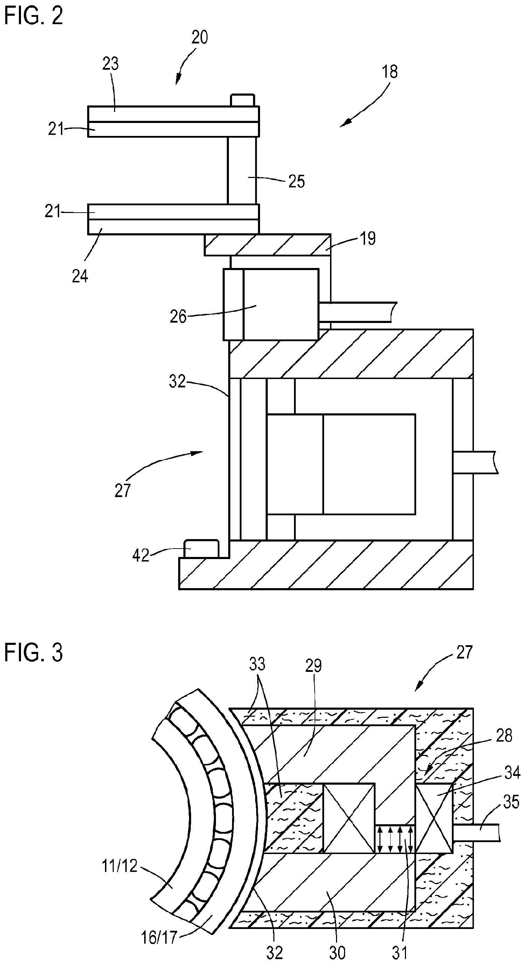

Am oberen Ende des Trägerkörpers 2 ist ein radial vorspringender umlaufender Ansatz 5 vorgesehen, an dem äquidistant verteilt eine Vielzahl einzelner Permanentmagnete 6 (siehe hierzu auch Figur 3) aufgenommen sind. Die Permanentmagnete sind so angeordnet, dass ihr Magnetfeld parallel zur Drehachse D des Werkstückträgers 1 steht.

Vorgesehen ist ferner ein Messring 7, der Teil einer Positionsmesseinrichtung ist, die der inkrementellen oder absoluten Erfassung des Winkels oder der Relativposition des Werkstückträgers 1 zur nachfolgend noch zu beschreibenden Halterung dient. Am Messring 7 können äquidistant und umlaufend eine Vielzahl einzelner, über einen noch zu beschreibenden Messsensor zu erfassender inkrementeller Messelemente wie beispielsweise Reflexionselemente, Rillen etc. vorgesehen sein, also letztlich erfassbare Elemente, über die ein Positionssignal ermittelt werden kann.

Des Weiteren sind am Werkstückträger 1 zwei Wälzlager 9, 10 vorgesehen, die über ihre Innenringe 11, 12 in einer entsprechenden Wälzlageraufnahme 13 am Trägerkörper 2 fixiert sind und mittels eines Spannrings 14, der über entsprechende Schraubverbindungen 15 am Trägerkörper 2 verschraubt ist, verspannt sind. Die Wälzlager 9, 10 weisen den gleichen Durchmesser auf, was insbesondere für deren beiden Außenringe 16, 17 gilt, da über sie die Fixierung in der nachfolgend zu beschreibenden Halterung erfolgt. Anstelle des Verbaus zweier solcher Wälzlager 9, 10, die hier als Rillenkugel- oder Spindellager ausgeführt sind, wäre es grundsätzlich auch denkbar, nur ein Wälzlager zu integrieren, das dann beispielsweise als axial gesehen breiteres Nadellager ausgeführt ist, vorzusehen. Wie die beiden Wälzlager 9, 10 lässt auch ein entsprechend breit ausgelegtes Nadellager die Aufnahme etwaiger Kippmomente in der Montagestellung zu.

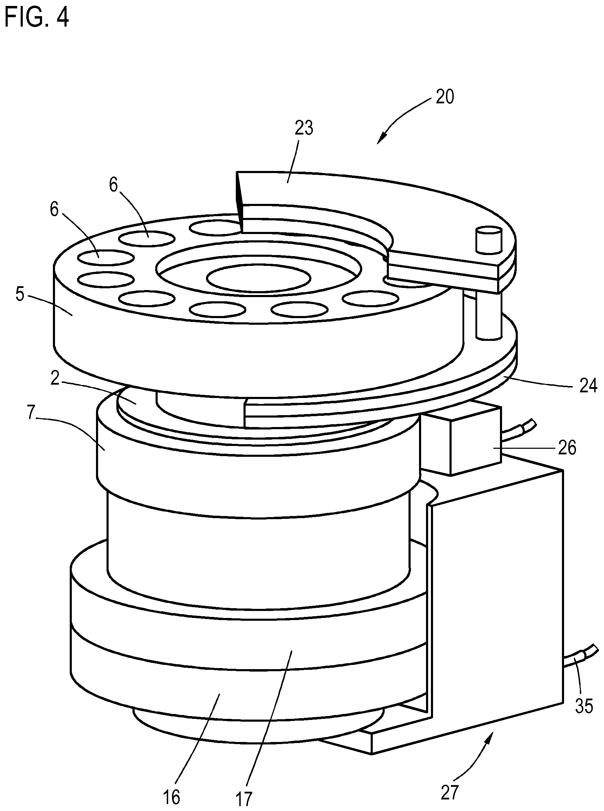

Figur 2 zeigt eine geschnittene Prinzipdarstellung einer Halterung 18, die der temporären Aufnahme eines Werkstückträgers 1, wie er in Figur 1 gezeigt ist, dient. Die Halterung 18 weist ebenfalls einen entsprechenden, beispielsweise als Gussteil ausgeführten zentralen Halterungskörper 19 auf. An ihm ist zum einen ein Stator 20 vorgesehen, umfassend zwei voneinander beabstandete Statorwicklungen 21, 22, die jeweils mit einer Platte 23, 24 aus einem den magnetischen Fluss gut leitenden, also eine hohe Permeabilität aufweisenden Material wie beispielsweise Stahl bestehen. Die über eine nicht näher gezeigte Steuerungseinrichtung bestrombaren Statorwicklungen 21, 22 sind vorzugsweise als Multilayerplatten ausgeführt. Wie Figur 4 zu entnehmen ist, erstrecken sich zumindest die Platten 23, 24, vorzugsweise aber natürlich auch die entsprechenden Statorwicklungen 21, 22 um ein gewisses Winkelinkrement, so dass sich über die Statorwicklungen 21, 22 ein um dieses Winkelinkrement wanderndes magnetisches Wanderfeld erzeugen lässt. Der Stator 20 ist ersichtlich seitlich offen, über die Verbindungsstange 25 ist quasi eine U-förmige Grundstruktur realisiert. Der Stator 25 bildet den zweiten Teil eines Torquemotors, der durch den Rotorabschnitt 5 des Werkstückträgers 1 im montierten Zustand komplettiert wird.

Vorgesehen ist an dem Halterungskörper 19 ferner ein Messsensor 26, der in der Montagestellung berührungslos den Messring 7 abtastet, um eine exakte, hochgenaue Positionsinformation zu erzeugen. Messsensor 26 und Messring 7 bilden also ein inkrementell oder absolut messendes Winkelmesssystem.

Um den Werkstückträger 1 temporär zu haltern und ihn gleichzeitig drehbar zu fixieren ist an dem Halterungskörper 19 eine Fixiereinrichtung 27 vorgesehen, die magnetisch mit den beiden Außenringen 16, 17 der beiden Wälzlager 9, 10 zusammenwirkt. Diese Fixiereinrichtung, die im Prinzip in Figur 3 gezeigt ist, umfasst eine Magnetfelderzeugungseinrichtung 28, die in der Lage ist, einerseits ein Grundmagnetfeld, andererseits ein veränderbares, ihm überlagerbares Zusatzmagnetfeld zu erzeugen. Hierzu sind zwei Polschuhe 29, 30 vorgesehen, beide aus magnetisch gut leitendem Stahl, zwischen die ein Permanentmagnet 31 gesetzt ist. Das heißt, dass das Feld des Permanentmagneten über die beiden Polschuhe an die Anlagefläche 32, die von den beiden Polschuhen 29, 30 und der Vergussmasse 33 gebildet wird, geführt wird. Polschuhe 29, 30 und Permanentmagnet 31 bilden folglich ein Joch. Um das Magnetfeld, das an der Anlagefläche 32 anliegt, in seiner Stärke verändern zu können ist eine Spule 34 vorgesehen, die über eine nicht näher gezeigte Steuerungseinrichtung über das Kabel 35 bestromt werden kann. Je nach Funktionsprinzip respektive Bestromungsrichtung kann hierüber in die Polschuhe 29, 30 ein Magnetfeld induziert werden, das dem Feld des Permanentmagneten 31 gleichgerichtet ist, so dass insgesamt ein gegenüber dem Permanentmagnetfeld verstärktes Gesamtmagnetfeld erzeugt wird. Ist das Spulenfeld entgegengesetzt gerichtet, kann eine definierte Feldschwächung realisiert werden.

Um eine exakte Zentrierung eines in eine Halterung 18 einzubringenden Werkstückträgers 1 sicherzustellen sind halterungsseitig Zentrierbolzen 42 oder Ähnliches vorgesehen, die mit entsprechenden Zentrieraufnahmen am Werkstückträger 1 zusammenwirken.

Der Permanentmagnet 31 wie auch die Permanentmagneten 6 am Rotorabschnitt 5 können aus beliebigen, ein hinreichendes Feld erzeugenden Werkstoffen wie beispielsweise Ferrit, Samarium-Kobalt oder Neodym-Eisen-Bor bestehen. Die Vergussmasse 33, die die Fixiereinrichtung 27 als geschlossenes Bauteil kapselt, kann beispielsweise PUR, ein Epoxidharz oder ein einoder zweikomponentiges Gießharz sein.

Wie die Figur 2 und 3 zeigen, ist folglich nicht nur der Stator 20 seitlich offen, vielmehr ist auch die Fixiereinrichtung 27 seitlich offen, das heißt, die Anlagefläche 32 liegt frei.

Soll nun ein Werkstückträger 1 in der Halterung 18 fixiert werden, so wird der Werkstückträger 1 von der Seite her in die letztlich gerundete, genähert der Werkstückträgerform entsprechende Halterung 18 eingesetzt. Die beiden Außenringe 16, 17 der Wälzlager 9, 10 werden in Richtung der Anlagefläche 32 und damit der Fixiereinrichtung 27 bewegt. Die Außenringe gelangen in den Bereich des über die Magnetfelderzeugungseinrichtung 28 erzeugten Magnetfelds, werden also angezogen. In der Montagestellung liegen sie formschlüssig an der Anlagefläche 32 an. Sie schließen folglich den magnetischen Kreis. Das Magnetfeld des Permanentmagneten 31 ist dabei so bemessen, dass auch ohne ein zusätzliches über die Spule 34 erzeugtes Feld eine Haltekraft gegeben ist, die sicherstellt, dass der eingesetzte Werkstückträger 1 sicher fixiert ist (fail-safe). Über das über die Spule 34 erzeugte Magnetfeld kann, wenn über beispielsweise den Messsensor 26 das Erreichen der korrekten Einsetzposition detektiert wird (was selbstverständlich ohne Weiteres möglich ist), das gesamte Haltemagnetfeld verstärkt werden, so dass eine sichere Fixierung während der nachfolgend vorzunehmenden Bearbeitungsaufgabe erfolgt. Soll der Werkstückträger 1 entnommen werden, kann durch Änderung der Bestromungsrichtung ein Spulenmagnetfeld erzeugt werden, das dem Feld des Permanentmagneten entgegengesetzt wird, so dass das Gesamtmagnetfeld deutlich geschwächt wird und der Werkstückträger 1 ohne Weiteres der Halterung 18 entnommen werden kann.

Gleichzeitig mit dem Einsetzen der beiden Außenringe 16, 17 in die Fixiereinrichtung 27 wird der Rotorabschnitt 5 zwischen die beiden Statorwicklungen 21, 22, also in den Stator 20 bewegt. Mit Erreichen der Einsatzendstellung liegen die Permanentmagnete 6 des Rotorabschnitts 5 folglich genau zwischen den Statorwicklungen 21, 22 und können mit dem statorseitig erzeugten Magnetfeld wechselwirken. Diese Montagestellung ist in Figur 4 gezeigt. Ersichtlich befindet sich der Rotorabschnitt 5 im Stator 20, wie sich auch die Außenringe 16, 17 in der Fixiereinrichtung 27 befinden.

Soll nun der Werkstückträger 1 und mit ihm das in Figur 4 nicht näher gezeigte Werkstück 4 grundsätzlich gedreht werden oder in eine bestimmte Position gebracht werden, so wird über die hier nicht näher gezeigte Steuerungseinrichtung der Stator entsprechend angesteuert respektive die Statorwicklungen 21, 22 entsprechend bestromt, so dass sich ein magnetisches Wanderfeld ergibt, dem die Permanentmagneten 6 des Rotorabschnitts 5 folgen, so dass es zur Rotation um die Drehachse D geht. Dies ist ohne Weiteres möglich, nachdem die Außenringe 16, 17 in der Fixiereinrichtung 27 festgelegt sind, das heißt, der Werkstückträger 1 dreht sich relativ zu seinen Außenringen 16, 17. Über den Messsensor 26 wird der an ihm vorbeirotierende Messring 7 erfasst und berührungslos abgetastet, so dass hieraus entsprechende Positionsinformationen erfasst werden können. Der Messsensor 27 kann induktiv, optisch oder magnetoresistiv arbeiten, entsprechend sind natürlich der Messring 7 respektive die an ihm vorgesehenen Messelemente ausgeführt.

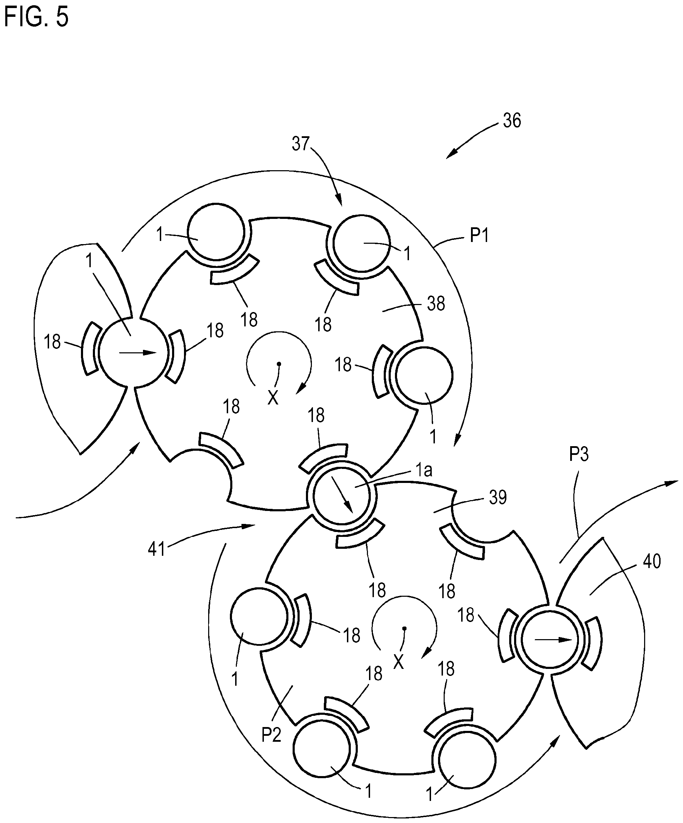

Figur 5 zeigt in Form einer Prinzipdarstellung eine Produktionsmaschine 36 umfassend ein Werkstückträgerumlaufsystem 37, Teil dessen die erfindungsgemäße Vorrichtung umfassend Werkstückträger 1 und Halterung 18 sind. Exemplarisch sind als Teil der Produktionsmaschine 36 drei Rundtische 38, 39, 40 gezeigt respektive angedeutet. Jeder Rundtisch 38, 39, 40 kann um eine Achse X rotieren. An jedem Rundtisch 38, 39, 40 sind umfangsmäßig verteilt mehrere Halterungen 18 vorgesehen, im gezeigten Beispiel jeweils sechs Halterungen. Diese sind fest mit dem jeweiligen Rundtisch verbunden, drehen also mit diesem mit. Die jeweiligen Tischdrehrichtungen sind über die Pfeile P1, P2 und P3 dargestellt. Die einzelnen Halterungen 18 sind an den Rundtischen an oder im Bereich entsprechender Taschen vorgesehen. Die Halterungen 18 sind hier nur exemplarisch dargestellt, wie auch die einzelnen Werkstückträger 1, die ersichtlich in den Taschen 18 zumindest zum Teil aufgenommen sind. Die Fixierung des Werkstückträgers in der jeweiligen Halterung erfolgt über die bezüglich Figur 3 beschriebene Fixiereinrichtung 27, also die Magnetfelderzeugungseinrichtung 28. Ersichtlich liegen zwei benachbarte Rundtische im Bereich einer Übergabestelle 41 relativ nahe beieinander. In diesem Bereich kann ein Werkstückträger 1 von einer Halterung 18 eines Drehtisches zu einer Halterung 18 des benachbarten Drehtisches übergeben werden. Exemplarisch ist dies für die Halterung 1a dargestellt, die von der Halterung 18 des Rundtisches 38 auf die im Übergabemoment gegenüberliegende Halterung 18 des Rundtisches 39 übergeben wird. Um den Übergabevorgang definiert und sicher durchführen zu können wird mit einem zeitlichen Offset vor der Übergabestelle 41 die Spule 34 der abgebenden Halterung 18 am Rundtisch 37 entsprechend bestromt, so dass die Haltekraft, also das resultierende Gesamtmagnetfeld, dortseits deutlich geschwächt wird. Darüber hinaus kann mit einem zeitlichen Offset vor der Übergabestelle 41 die Spule 34 der aufnehmenden Halterung 18 am Rundtisch 39 entsprechend bestromt werden, so dass deren Haltekraft respektive das sich ergebende Gesamtmagnetfeld deutlich erhöht wird. Dadurch kommt es zu einer Zugkraft, resultierend aus dem starken Magnetfeld seitens der Halterung 18 am Rundtisch 39 auf den Werkstückträger 1a respektive die Außenringe 16, 17. Dieses Magnetfeld respektive diese Zugkraft wirkt in Richtung der aufnehmenden Halterung 18 und erwirkt letztlich die Übernahme oder Übergabe des Werkstückträgers 1a vom Rundtisch 38 auf den Rundtisch 39. Da die Rundtische 38, 39, 40 in ihrer Rotation synchronisiert sind, wird sichergestellt, dass sich eine abgebende Halterung mit dem Werkstückträger und eine aufnehmende Halterung zum richtigen Zeitpunkt einander gegenüberliegen.

Nach Übernahme eines Werkstückträgers kann dieser sodann über die Halterung 18 ohne weiteres in die gewünschte Drehstellung verbracht oder grundsätzlich rotiert werden, was über den dann gebildeten Torquemotor bestehend aus dem Stator 20 der Halterung 18 und dem Rotorabschnitt 5 des aufgenommenen Werkstückträgers 1 ohne weiteres möglich ist.

Wenngleich im gezeigten Beispiel gemäß Figur 5 die einzelnen Rundtische 38, 39, 40 als Teil einer Produktionsmaschine beschrieben sind, ist es selbstverständlich auch denkbar, dass jeder Rundtisch Teil einer eigenen Produktionsmaschine ist, also Teil einer eigenen Rundläufermaschine ist, wobei die mehreren Produktions- respektive Rundläufermaschine zu einer Anlage integriert sind.

**Bezugszahlenliste**

| | | | |
|---|---|---|---|
| 1 | Werkstückträger | 23 | Platte |
| 1a | Werkstückträger | | |
| 2 | Trägerkörper | | |
| 3 | Werkstückaufnahme | | |
| 4 | Werkstück | | |
| 5 | Ansatz | | |
| 6 | Permanentmagnete | | |
| 7 | Messring | | |
| 9 | Wälzlager | | |
| 10 | Wälzlager | | |
| 11 | Innenring | | |
| 12 | Innenring | | |
| 13 | Wälzlageraufnahme | | |
| 14 | Spannring | | |
| 15 | Schraubverbindungen | | |
| 16 | Außenring | | |
| 17 | Außenring | | |
| 18 | Halterung | | |
| 19 | Haltekörper | | |
| 20 | Stator | | |
| 21 | Statorwicklung | | |
| 22 | Statorwicklung | | |
| 24 | Platte | | |
| 25 | Verbindungsstange | | |
| 26 | Messsensor | | |
| 27 | Fixiereinrichtung | | |
| 28 | Magnetfelderzeugungseinrichtung | | |
| 29 | Polschuhe | | |
| 30 | Polschuhe | | |
| 31 | Permanentmagnet | | |
| 32 | Anlagefläche | | |
| 33 | Vergussmasse | | |
| 34 | Spule | | |
| 35 | Kabel | | |
| 36 | Produktionsmaschine | | |
| 37 | Werkstückträgerumlaufsystem | | |
| 38 | Rundtisch | | |
| 39 | Rundtisch | | |
| 40 | Rundtisch | | |
| 41 | Übergabestelle | | |
| P1 | Pfeil | | |
| P2 | Pfeil | | |
| P3 | Pfeil | | |
| D | Drehachse | | |

## Patentansprüche

1. Vorrichtung zur Aufnahme eines Werkstücks für ein Werkstückumlaufsystem einer Produktionsmaschine, umfassend einen Werkstückträger (1) mit einer Werkstückaufnahme (3) und eine maschinenseitig anzuordnende Halterung (18) zur lösbaren temporären Aufnahme des Werkstückträgers (1), wobei der um eine Achse (D) drehbar in der Halterung (18) aufnehmbare Werkstückträger (1) einen Rotorabschnitt (5) aufweist, der bei Aufnahme in der Halterung (18) mit einem an der Halterung (18) vorgesehenen Stator (20) unter Bildung eines Torquemotors zusammenwirkt, **dadurch gekennzeichnet, dass** der Rotorabschnitt (5) als radial vorspringender umlaufender Ansatz mit integrierten Permanentmagneten (6) ausgeführt ist, der in der Montagestellung zwischen halterungsseitig voneinander beabstandet angeordnete Statorwicklungen (21, 22) des seitlich offenen Stators (20) aufgenommen ist.

2. Vorrichtung nach Anspruch 1, **dadurch gekennzeichnet, dass** die Statorwicklungen (21, 22) jeder Seite mit jeweils einer magnetisch leitfähigen Platte (23, 24) verbunden sind.

3. Vorrichtung nach Anspruch 2, **dadurch gekennzeichnet, dass** am Werkstückträger (1) wenigstens ein Wälzlager (9, 10) mit einem Außenring (16, 17) vorgesehen ist, das unmittelbar über den Außenring (16, 17) oder über ein mit ihm verbundenes Befestigungselement in der Montagestellung lösbar mit einer Fixiereinrichtung (27) der Halterung (18) zusammenwirkt.

4. Vorrichtung nach Anspruch 3, **dadurch gekennzeichnet, dass** die Fixiereinrichtung (27) mit dem Außenring (16, 17) oder dem Befestigungselement magnetisch zusammenwirkt.

5. Vorrichtung nach Anspruch 4, **dadurch gekennzeichnet, dass** die Fixiereinrichtung (27) eine Magnetfelderzeugungseinrichtung (28) aufweist, über die ein in seiner Stärke veränderliches Magnetfeld erzeugbar ist.

6. Vorrichtung nach Anspruch 5, **dadurch gekennzeichnet, dass** die Magnetfelderzeugungseinrichtung (28) ein Magnetjoch bestehend aus wenigstens einem zwischen zwei Polschuhen (29, 30) aufgenommenen Permanentmagneten (31) sowie wenigstens eine bestrombare, um das Magnetjoch gewickelte Spule (34), die ein das Magnetfeld des Permanentmagneten (31) verstärkendes oder schwächendes Magnetfeld induziert, aufweist.

7. Vorrichtung nach einem der Ansprüche 4 bis 6, **dadurch gekennzeichnet, dass** die Fixiereinrichtung (27), insbesondere die beiden Polschuhe (29, 30), eine formschlüssig am Außenring (16, 17) oder am Befestigungselement anliegende Anlagefläche (32) aufweist.

8. Vorrichtung nach einem der vorangehenden Ansprüche, **dadurch gekennzeichnet, dass** eine Positionsmesseinrichtung zur Ermittlung der Winkelposition des Werkstückträgers (1) relativ zur Halterung (18) vorgesehen ist.

9. Vorrichtung nach Anspruch 8, **dadurch gekennzeichnet, dass** die Positionsmesseinrichtung ein oder mehrere am Werkstückträger (1) vorgesehene, mit ihm rotierende Messelemente, insbesondere einen Messring (7), sowie einen statorseitig vorgesehen Messsensor (26) zum berührungslosen Erfassen des oder der Messelemente umfasst.

## Claims

1. A device for receiving a workpiece for a workpiece circulation system of a production machine, comprising a workpiece carrier (1) with a workpiece holder (3) and a holder (18) to be arranged on the machine for receiving the workpiece carrier (1) in a detachable, temporary manner, wherein the workpiece carrier (1) which can be received in a rotatable manner about an axis (D) in the holder (18) comprises a rotor section (5) which, when received in the holder (18), interacts with a stator (20) provided on the holder (18), forming a torque motor, **characterised in that** the rotor section (5) is designed as a radially projecting circumferential projection with integrated permanent magnets (6) which is accommodated in the assembly position between stator windings (21, 22) of the laterally open stator (20) spaced apart from one another on the holding side.

2. The device according to claim 1, **characterised in that** the stator windings (21, 22) of each side are each connected to a magnetically conductive plate (23, 24).

3. The device according to claim 2, **characterised in that**, on the workpiece carrier (1), at least one rolling bearing (9, 10) with an outer ring (16, 17) is provided that detachably interacts, in the assembly position, with a fixing device (27) of the holder (18) directly by the outer ring (16, 17) or by a fastening element connected to said outer ring.

4. The device according to claim 3, **characterised in that** the fixing device (27) interacts magnetically with the outer ring (16, 17) or the fastening element.

5. The device according to claim 4, **characterised in that** the fixing device (27) comprises a magnetic field generating device (28) generating a magnetic field of variable intensity.

6. The device according to claim 5, **characterised in that** the magnetic field generating device (28) comprises a magnetic yoke consisting of at least one permanent magnet (31) held between two pole shoes (29, 30) and at least one coil (34) that is energisable and is wound around the magnetic yoke and induces a magnetic field that reinforces or weakens a magnetic field of the permanent magnet (31).

7. The device according to any one of claims 4 to 6, **characterised in that** the fixing device (27), in particular the two pole shoes (29, 30), comprises a contact surface (32) that forms a positive-locking contact on the outer ring (16, 17) or on the fastening element.

8. The device according to any one of the preceding claims, **characterised in that** a position measuring device for determining the angular position of the workpiece carrier (1) relative to the holder (18) is provided.

9. The device according to claim 8, **characterised in that** the position measuring device comprises one or more measuring elements, in particular a measuring ring (7), provided on the workpiece carrier (1) and rotating with it, and a measuring sensor (26) provided on stator side for contactless detection of the one or more measuring elements.

## Revendications

1. Dispositif de réception d'une pièce pour un système rotatif de porte-pièce d'une machine de production, comprenant un porte-pièce (1) avec une réception de pièce (3) et un support (18) agencé côté machine, destiné à recevoir de manière temporaire et amovible, le porte-pièce (1), le porte-pièce (1) pouvant être réceptionné dans le support (18) de manière à pouvoir tourner autour d'un axe (D) présentant une partie de rotor (5) qui, lorsqu'elle est reçue dans le support (18), coopère avec un stator (20) prévu sur le support (18) pour former un moteur couple, **caractérisé en ce que** la partie de rotor (5) est conçue sous la forme d'une saillie circonférentielle saillant radialement avec des aimants permanents intégrés (6), qui est logée dans la position de montage entre les enroulements de stator (21, 22) du stator ouvert latéralement (20) espacés les uns des autres du côté support.

2. Dispositif selon la revendication 1, **caractérisé en ce que** les enroulements de stator (21, 22) sont chacun reliés de chaque côté à une plaque magnétiquement conductrice (23, 24).

3. Dispositif selon la revendication 2, **caractérisé en ce que** sur le porte-pièces (1) est prévu au moins un roulement (9, 10) avec une bague extérieure (16, 17), qui coopère en position de montage de manière amovible avec un dispositif d'attache (27) du support (18), directement sur la bague extérieure (16, 17) ou par l'intermédiaire d'un organe de fixation qui lui est relié.

4. Dispositif selon la revendication 3, **caractérisé en ce que** le dispositif d'attache (27) coopère magnétiquement avec la bague extérieure (16, 17) ou l'élément de fixation.

5. Dispositif selon la revendication 4, **caractérisé en ce que** le dispositif d'attache (27) comprend un moyen générateur de champ magnétique (28) par lequel un champ magnétique d'intensité variable peut être généré.

6. Dispositif selon la revendication 5, **caractérisé en ce que** le moyen générateur de champ magnétique (28) comprend une culasse magnétique constituée d'au moins un aimant permanent (31) reçu entre deux pièces polaires (29, 30) et d'au moins une bobine (34) pouvant être alimentée, enroulée autour de la culasse magnétique, qui induit un champ magnétique amplifiant ou atténuant le champ magnétique de l'aimant permanent (31).

7. Dispositif selon l'une des revendications 4 à 6, **caractérisé en ce que** le dispositif d'attache (27), en particulier les deux pièces polaires (29, 30), présente une surface d'appui (32) reposant par concordance géométrique sur la bague extérieure (16, 17) ou sur l'élément de fixation.

8. Dispositif selon l'une des revendications précédentes, **caractérisé en ce qu'**il est prévu un dispositif de mesure de position pour déterminer la position angulaire du porte-pièce (1) par rapport au support (18).

9. Dispositif selon la revendication 8, **caractérisé en ce que** le dispositif de mesure de position comprend un ou plusieurs éléments de mesure rotatifs sur le porte-pièces (1), en particulier une bague de mesure (7), ainsi qu'un capteur de mesure (26) prévu côté stator pour la détection sans contact du ou des éléments de mesure.
